# EUROPEAN PATENT SPECIFICATION

(11) **EP 2 919 517 B1**
(45) Date of publication and mention of the grant of the patent: **13.11.2019**
(21) Application number: 14159876.3
(22) Date of filing: 14.03.2014
(51) Int. Cl.: H04W 36/00, H04B 7/02

(54) **Method for determining a ranking of nodes of a group of nodes**
Verfahren zur Bestimmung einer Rangfolge von Knoten in einer Gruppe von Knoten
Procédé pour déterminer un classement de noeuds d'un groupe de noeuds

(43) Date of publication of application: 16.09.2015
(73) Proprietor: Mitsubishi Electric R&D Centre Europe B.V., 1119 NS Schiphol Rijk (NL); Mitsubishi Electric Corporation, Chiyoda-ku Tokyo 100-8310 (JP)
(72) Inventor: Khanfouci, Mourad, 35708 Rennes Cedex 7 (FR); Brunel, Loïc, 35708 Rennes Cedex 7 (FR)
(74) Representative: Cabinet Le Guen Maillet

(56) References cited:
- US-A1- 2002 176 581
- US-A1- 2013 244 669
- QUALCOMM EUROPE: "Improvements to Cell Reselection", 3GPP DRAFT; R2-080372, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Sevilla, Spain; 20080108, 8 January 2008 (2008-01-08), XP050138226, [retrieved on 2008-01-08]
- HUAYING ZHOU: "A Dynamic Neighbor Cell List Generating Algorithm in Cellular System", WIRELESS COMMUNICATIONS, NETWORKING AND MOBILE COMPUTING, 2009. WICOM '09. 5TH INTERNATIONAL CONFERENCE ON, IEEE, PISCATAWAY, NJ, USA, 24 September 2009 (2009-09-24), pages 1-4, XP031554327, ISBN: 978-1-4244-3692-7

## Description

The present invention relates generally to a method and a device for determining a ranking of nodes of a group of nodes a centralizing device being in charge of, the ranking being intended to be used for determining a list of alternative nodes that may serve a mobile terminal located in the area covered by the group of nodes.

Wireless cellular telecommunication networks are largely used today. Some base stations provide an access to such networks in large coverage areas or in small coverage areas. The base stations providing the access in small coverage areas are named home base stations or pico base stations or femto base stations. As their coverage areas are small, the need to perform handovers for mobile terminals is much more important than macro base stations.

Dual connectivity where a mobile terminal is simultaneously connected to several base stations is currently considered. In Dual connectivity, the mobile terminal receives control information from a macro base station and data from nearby home base station in a heterogeneous network setting. Being connected to a macro base station for the control information is particularly beneficial for mobile terminals with high velocity, which have to make many handovers between small cells. The macro base station acts as a kind of anchor for the control signalling of the mobile terminal it limits then the risk of handover failure. Usual handover of control information happens between a source home base station and a target home base station.

Wired backhaul congestion is another common problem in the context of dual connectivity within a group of home base stations with high density of home base stations. In such scenario, the mobile terminal receives control and/or data information from multiple home base stations of the group of home base stations. The wired backhaul of the home base stations being poor, it is necessary to avoid the control and/or data signalling congestion in the wired backhaul by handing over control and/or data packets to at least one neighbouring home base station or base station. The quality of service of the mobile terminal is then maintained by the means of coordinated multipoint transmission (CoMP) from the chosen base stations or home base stations.

In Dual connectivity scenario, changing the home base stations transmitting control and/or data for a given mobile terminal introduces signaling overhead over the backhaul network and may cause control resource shortage if the chosen home base stations contribute to an important number of handovers.

In CoMP scenario, the home base stations chosen for dynamic switch coordinated multipoint (DS-CoMP) should not contribute to an important number of handovers. The DS-CoMP establishment introduces important signaling overhead over the core network.

The patent application US 2013/244669 discloses a method that includes identifying at least one neighbour small-area cell of a first small-area cell, exchanging information between the first small-area cell and the identified at least one neighbour small-area cell.

The paper of Qualcomm Europe entitled "improvement for cell reselection" published in 3GPP Draft; R2-080372 vol. RAN WG2, no. Sevilla, Spain discloses improvement for cell reselection.

The present invention aims at providing a solution for solving the problem of signalling overhead over the core network and resource shortage for the control and/or data signalling in the alternative home base stations. The alternative base stations are either the home base stations transmitting control and/or data for a given mobile terminal in Dual connectivity scenario or home base stations used for dynamic switch coordinated multipoint (DS-CoMP).

The present invention is defined by the appended claims. To that end, the present invention concerns a method for determining a ranking of nodes of a group of nodes a centralizing device being in charge of, the ranking being intended to be used for determining a list of alternative nodes that may serve a mobile terminal located in the area covered by the group of nodes, the mobile terminal being served simultaneously by plural nodes, characterized in that the method comprises the steps, executed by the centralizing device, of:
- determining a neighbourhood graph of the group of nodes,
- determining a transition matrix from the determined neighbourhood graph, the transition matrix being a matrix that expresses uniform random mobility in the group of nodes,
- ranking the nodes according to the determined transition matrix.

The present invention also concerns a device for determining a ranking of nodes of a group of nodes a centralizing device being in charge of, the ranking being intended to be used for determining a list of alternative nodes that may serve a mobile terminal located in the area covered by the group of nodes, the mobile terminal being served simultaneously by plural nodes, characterized in that the centralizing device comprises:
- means for determining a neighbourhood graph of the group of nodes,
- means for determining a transition matrix from the determined neighbourhood graph, the transition matrix being a matrix that expresses uniform random mobility in the group of nodes,
- means for ranking the nodes according to the determined transition matrix.

Thus, signalling over the core network, related to the alternative nodes determination, during the mobility of the mobile terminals in the coverage area of the group of the nodes is reduced.

According to a particular feature, the neighbourhood graph identifies neighbours nodes, a node and another node are neighbours if mobile terminals served by the node have performed handover to the other node and/or the distance between a node and another node is below a predefined threshold and/or another node is reported by mobile terminals served by the node with and/or a node measures a Reference Signal Received Power level from another node upper than a predetermined threshold and/or another node is reported by mobile terminals served by the node with Reference Signal Received Quality upper than a predetermined threshold level to the node by at least one mobile terminal served by the node and/or a node is neighbour of another node if the node belongs to a neighbour relation table of the other node.

Thus, the quality of service experienced by the mobile terminals deployed in the coverage area of the group of nodes is improved since the neighbourhood graph is dependent on the actual measured signals from the mobile terminals.

According to a particular feature, the diagonal matrix comprises the same number of line and columns as the number of nodes of the group of nodes, each line and column being dedicated to a respective node, the off diagonal elements of the transition matrix are equal to null value if the node, of which the line or column is dedicated to, is not neighbour of the node, the off diagonal elements of the transition matrix are equal to the inverse of the number of the neighbours of the node of which the line or column is dedicated to, if the node the is neighbour of the node of which the column or line is dedicated to.

Thus, flexibility is added to the alternative nodes determination since it is dependent from the neighbouring relations between the nodes in the group of nodes.

According to a particular feature, the ranking of the nodes is the values in the eigenvector of the maximum eigenvalue of the transition matrix.

Thus, the ranking of one node corresponds to the mean, *a priori,* handovers of the user terminal to said node and gives information about the stress of the node during the mobility of mobile terminals in the coverage area of the group of nodes. The alternative nodes determination process optimizes this metric.

According to a particular feature, the method further comprises the step of transferring the ranking of the nodes to the nodes and the determination of the list of alternative nodes is performed by each node for at least one mobile terminal the node serves.

Thus, reactivity is added to the alternative nodes determination procedure since alternatives nodes list is used within each node. Moreover, complexity of the centralizing device is reduced.

According to a particular feature, the method further comprises the step of determining, by the centralizing device, the list of alternative nodes.

Thus, performance of the handovers of the mobile terminals and/or control signalling related to the mobile terminals to the alternative nodes is further improved since the alternative nodes list is determined from the overall propagation and neighbourhood conditions of the group of nodes.

According to a particular feature, the mobile terminal is served simultaneously by plural nodes in a Dynamic switching Coordinated multipoint transmission and the alternative node list is based on measurements received from the mobile terminals directly or collected by the nodes and transmitted to the centralizing device and having the least ranking.

Thus, the handover performance of the mobile terminals and/or control signalling related to the mobile terminals to the alternative nodes is further improved since the nodes with the least expected handovers are chosen as alternative nodes.

According to a particular feature, the mobile terminal is served simultaneously by plural nodes in a Dynamic switching Coordinated multipoint transmission.

Thus, quality of service experienced by the mobile terminals in the coverage region of the group nodes is improved by the means of coordinated multipoint transmission to said mobile terminals.

According to a particular feature, the mobile terminal is served simultaneously by plural nodes in a Dual connectivity transmission and the alternative node list based on measurements received from the mobile terminals directly or collected by the nodes and transmitted to centralizing device and having the least ranking.

Thus, congestion of the control signalling related to the mobile terminals in the coverage area of the group of nodes is minimized and the overall performance is improved.

According to a particular feature, the alternative node list comprises the N nodes as the *N* nodes with lowest rank among a list of *N'>N* nodes with highest SINR for the mobile terminal, the nodes carrying the control signalling are the *L* nodes with lowest rank among the *N* nodes or the *L* nodes carrying the control signalling are the *L* nodes with highest SINR among the *N* nodes or the *N* nodes may be chosen as the *N* nodes with highest SINR for the mobile terminal among a list of *N'>N* nodes with lowest rank, the *N-L* nodes not carrying control signalling being the *N-L* nodes with highest SINR for the mobile terminal among a list of *N'*≥*N-L* nodes with lowest rank or the *L* nodes carrying the control signalling being the *L* nodes with highest SINR or the *N-L* nodes not carrying control signalling but data may be chosen as the *N-L* nodes with lowest rank among a list of *N'*≥*N-L* nodes with highest SINR for the mobile terminal and the *L* nodes carrying the control signalling being the *L* nodes with lowest rank or the *L* nodes carrying control signalling being the *L* nodes with highest SINR for the mobile terminal among a list of *N'*≥*L* nodes with lowest rank and the *N-L* nodes not carrying the control signalling being the *N-L* nodes with highest SINR or the *L* nodes carrying control signalling being the *L* nodes with lowest rank among a list of *N'*≥*L* nodes with highest SINR for the mobile terminal and the *N-L* nodes not carrying the control signalling being the *N-L* nodes with lowest rank.

Thus, the flexibility and reactivity of the alternative nodes determination are improved for the mobile terminals during mobility and in dual connectivity transmission and the congestion of the network related to the control and/or data signalling related to the at least one user terminal in the coverage of the group of nodes is reduced.

According to still another aspect, the present invention concerns computer programs which can be directly loadable into a programmable device, comprising instructions or portions of code for implementing the steps of the methods according to the invention, when said computer programs are executed on a programmable device.

Since the features and advantages relating to the computer programs are the same as those set out above related to the methods and apparatus according to the invention, they will not be repeated here.

The characteristics of the invention will emerge more clearly from a reading of the following description of an example embodiment, the said description being produced with reference to the accompanying drawings, among which :
Fig. 1 represents a wireless cellular telecommunication network comprising a group of home base stations and/or base stations in which the present invention is implemented;
Fig. 2 is a diagram representing the architecture of a gateway in which the present invention is implemented;
Fig. 3 is a diagram representing the architecture of a home base station or a base station in which the present invention is implemented;
Fig. 4 discloses an example of an algorithm executed by the gateway according to a first mode of realization of the present invention;
Fig. 5 discloses a graph with a ranking generated by the gateway according to the present invention;
Fig. 6 discloses an example of a transition matrix generated by the gateway according to the present invention;
Fig. 7 discloses an example of an algorithm executed by a base station or a home base station according to the first mode of realization of the present invention;
Fig. 8 discloses an example of an algorithm executed by the gateway according to a second mode of realization of the present invention.

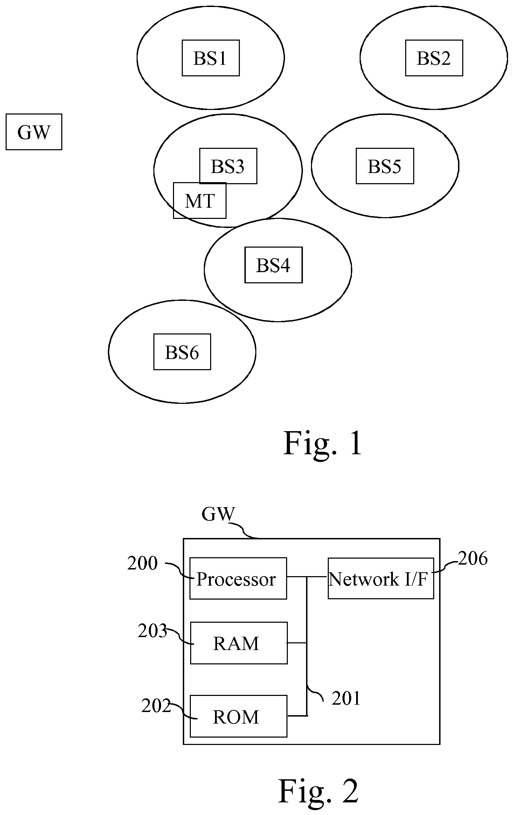

**Fig. 1** represents a wireless cellular telecommunication network comprising a group of home base stations and/or base stations in which the present invention is implemented.

In the example of Fig. 1, a group of six base stations or home base stations, named hereinafter nodes BS1 to BS6 cover an area.

The nodes BS1 to BS6 radiate signals in a cell that can be received and processed by mobile terminals located in the area of the cells of the nodes BS1 to BS6. The nodes BS1 to BS6 receive and are able to process signals transferred by mobile terminals located in their respective cells.

The wireless cellular telecommunication network comprises a centralizing device named gateway GW.

The gateway GW may be a dedicated device or may be comprised in a node of the wireless cellular telecommunication network.

Only one mobile terminal MT is shown in Fig. 1 for the sake of clarity. A more important number of mobile terminals are located in the area covered by the nodes BS1 to BS6.

Each node BS1 to BS6 is linked to the gateway through a telecommunication network, classically named backhaul. The telecommunication network may be a wired and/or an optical and/or a wireless network.

According to the invention, the gateway:
- determines a neighbourhood graph of the group of nodes,
- determines a transition matrix from the determined neighbourhood graph, the transition matrix being a matrix that expresses uniform random mobility in the group of nodes,
- ranks the nodes according to the determined transition matrix, the ranking being intended to be used for determining a list of alternative nodes that may serve a mobile terminal located in the area covered by the group of nodes.

**Fig. 2** is a diagram representing the architecture of a gateway in which the present invention is implemented.

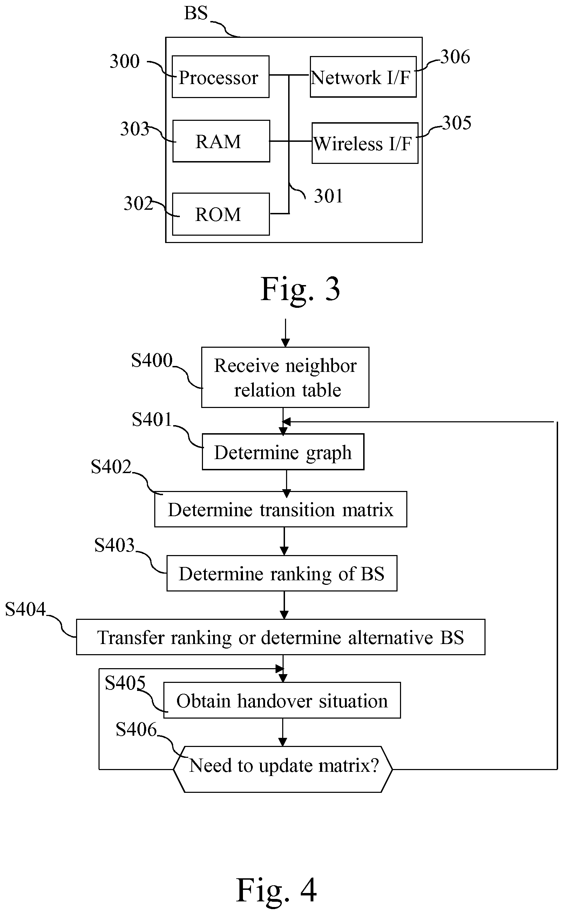

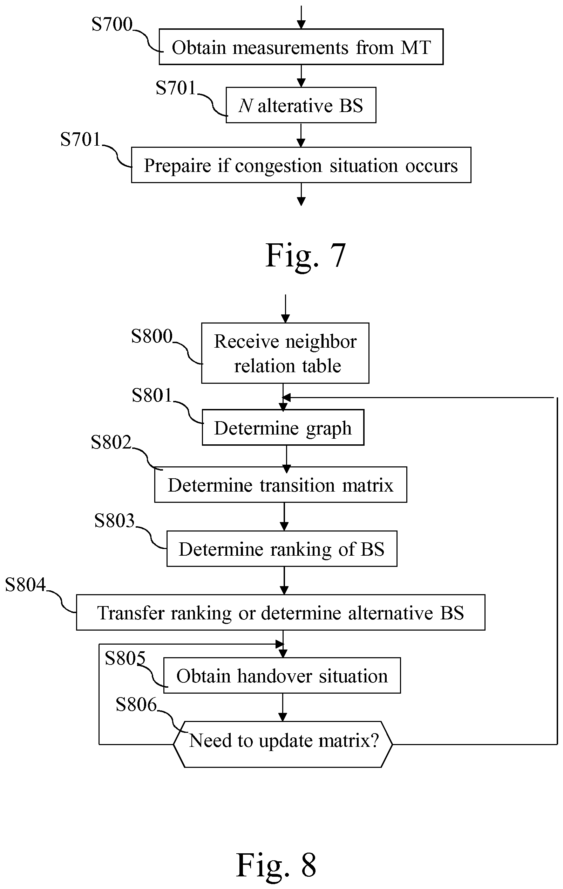

The gateway GW has, for example, an architecture based on components connected together by a bus 201 and a processor 200 controlled by the programs as disclosed in Figs. 4 and 8.

It has to be noted here that the gateway GW may have an architecture based on dedicated integrated circuits.

The bus 201 links the processor 200 to a read only memory ROM 202, a random access memory RAM 203 and a network interface 206.

The memory 203 contains registers intended to receive variables and the instructions of the programs related to the algorithms as disclosed in Figs. 4 and 8.

The processor 200 controls the operation of the network interface 206.

The read only memory 202 contains instructions of the programs related to the algorithms as disclosed in Figs. 4 and 8, which are transferred, when the gateway GW is powered on, to the random access memory 203.

Any and all steps of the algorithms described hereafter with regard to Figs. 4 and 8 may be implemented in software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the gateway GW includes circuitry, or a device including circuitry, causing the gateway GW to perform the steps of the algorithms described hereafter with regard to Figs. 4 and 8.

Such a device including circuitry causing the gateway GW to perform the steps of the algorithms described hereafter with regard to Figs. 4 and 8 may be an external device connectable to the gateway GW.

**Fig. 3** is a diagram representing the architecture of a home base station or a base station in which the present invention is implemented.

The node BS has, for example, an architecture based on components connected together by a bus 301 and a processor 300 controlled by the program as disclosed in Fig. 7.

It has to be noted here that the node BS may have an architecture based on dedicated integrated circuits.

The bus 301 links the processor 300 to a read only memory ROM 302, a random access memory RAM 303, a wireless interface and a network interface 304.

The memory 303 contains registers intended to receive variables and the instructions of the programs related to the algorithm as disclosed in Fig. 7.

The processor 300 controls the operation of the wireless interface 305.

The read only memory 302 contains instructions of the program related to the algorithm as disclosed in Fig. 7, which are transferred, when the node BS is powered on, to the random access memory 303.

Any and all steps of the algorithm described hereafter with regard to Fig. 7 may be implemented in a software by execution of a set of instructions or program by a programmable computing machine, such as a PC (*Personal Computer*), a DSP (*Digital Signal Processor*) or a microcontroller; or else implemented in hardware by a machine or a dedicated component, such as an FPGA (*Field-Programmable Gate Array*) or an ASIC (*Application-Specific Integrated Circuit*).

In other words, the node BS includes circuitry, or a device including circuitry, causing the node BS to perform the steps of the algorithm described hereafter with regard to Fig. 7.

Such a device including circuitry causing gateway to perform the steps of the algorithms described hereafter with regard to Fig. 7 may be an external device connectable to the node BS.

**Fig. 4** discloses an example of an algorithm executed by the gateway according to a first mode of realization of the present invention.

The present algorithm will be disclosed in an example where it is executed by the processor 200 of the gateway GW and is preferably executed in case of Dynamic switching Coordinated multipoint transmission.

At step S400, the processor 200 detects the reception, through the network interface 206, of neighbour relation tables transferred by each of the nodes BS1 to BS6.

A neighbour relation table is built by each node from measurements from mobile terminals the node serves., i.e. the nodes seen by the mobile terminals with SINR above a threshold or with received power above a predetermined threshold.

At next step S401, the processor 200 determines a neighbourhood graph of the group of nodes BS1 to BS6. The neighbourhood graph is constructed as follows: a node and another node are considered as neighbours if a significant portion of mobile terminals served by the node has performed handover to the other node in the past and/or the distance between a node and another node is below a predefined threshold and/or another node is reported by mobile terminals served by the node with a Reference Signal Received Power (RSRP) level upper than a predetermined threshold to the node by at least one mobile terminal and/or a node measures a RSRP level from another node upper than a predetermined threshold and/or another node is reported by mobile terminals served by the node with g Reference Signal Received Quality (RSRQ) level to the node by at least one mobile terminal served by the node upper than a predetermined threshold.

Each node is considered as a vertex in the neighbourhood graph and two neighbouring nodes are connected by an edge.

The neighbourhood graph may be known prior to any handover of the mobile terminals in the group of nodes BS1 to BS6 since core network may configure the list of neighbours of the nodes by loading neighbour relation tables (NRT) into each node of the group of nodes in a deployment phase. The neighbourhood graph may be constructed from neighbour relation tables as follows: a node is neighbour of another node if the node is member of the NRT table of the other node.

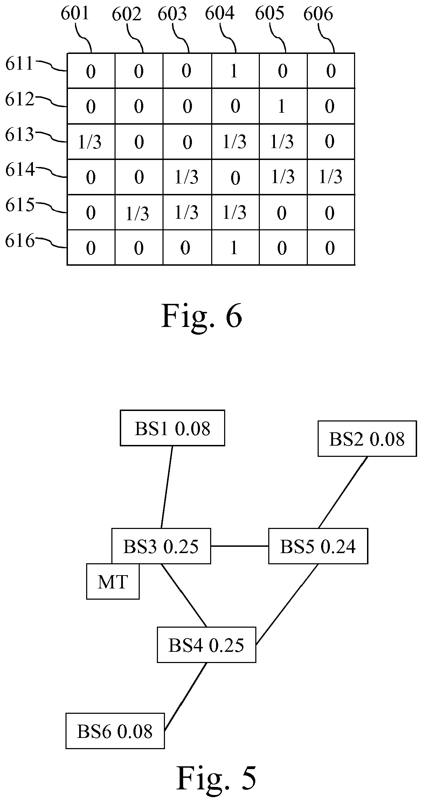

An example of a neighbourhood graph is given in Fig. 5.

**Fig. 5** discloses a graph with a ranking generated by the gateway according to the present invention.

The node BS1 is neighbour of the node BS3. The node BS1 is connected to the node BS3.

The node BS2 is neighbour of the node BS5. The node BS2 is connected to the node BS5.

The node BS3 is neighbour of the nodes BS1, BS4 and BS5. The node BS3 is connected to the node BS1, is connected to the node BS4 and is connected to the node BS5.

The node BS4 is neighbour of the nodes BS3, BS5 and BS6. The node BS4 is connected to the node BS3, is connected to the node BS5 and is connected to the node BS6.

The node BS4 is neighbour of the nodes BS3, BS5 and BS6. The node BS4 is connected to the node BS3, is connected to the node BS5 and is connected to the node BS6.

The node BS5 is neighbour of the nodes BS2, BS3 and BS4. The node BS5 is connected to the node BS2, is connected to the node BS3 and is connected to the node BS4.

The node BS6 is neighbour of the node BS4. The node BS6 is connected to the node BS4.

At next step S402, the processor 200 determines a transition matrix from the neighbourhood graph. The transition matrix is a matrix that expresses uniform random mobility in the group of nodes BS1 to BS6. The transition matrix is as follows.

The off diagonal elements express the transition probability of the mobile terminals. For the row i, the off diagonal elements in column j≠0 are either equal to 0 if the node BS*j* is not in the neighbour relation table of the node BS*i* or equal to the inverse of the number of the neighbours of the node BS*i* if the node BS*j* is in the neighbour relation table of the node BS*i*.

An example of a transition matrix is given in Fig. 5.

**Fig. 5** discloses an example of a transition matrix generated by the gateway according to the present invention.

The column 601 and line 611 stand for the node BS1. The column 602 and line 612 stand for the node BS2. The column 603 and line 613 stand for the node BS3. The column 604 and line 614 stand for the node BS4. The column 605 and line 615 stand for the node BS5. The column 606 and line 616 stand for the node BS6.

In a variant, the transition matrix is determined based on the actual average handovers in the group of nodes BS1 to BS6.

At next step S403, the processor 200 ranks the nodes BS1 to BS6

For example, the ranking of the nodes is a number *r* , 0 < *r* < 1 , associated to each vertex of the neighbourhood graph as follows:
The ranking r of a node is high if the node is contributing to an important number of mobile terminals random displacement in the group of nodes, i.e. the expected handovers of mobile terminals to the node is high when assuming no *a priori* information about the mobility path of the mobile terminal is given.

The ranking r of a node is low if the contribution of the node to random displacements of the mobile terminal in the group of nodes is low, i.e. the expected handovers of mobile terminals to the node is low when assuming no *a priori* information about the mobility path of the mobile terminal is given.

The ranking of the nodes may be determined using the transition matrix determined at step S402.

The eigenvector of the maximum eigenvalue of the transition matrix expresses the average proportion of independent paths that are linking the nodes of the graph when uniform random displacement of the mobile terminals is assumed through the coverage area of the group of nodes.

The ranking of the node is high if the node contributes to an important number of paths through the graph of the group of nodes. The node will encounter a lot of handovers with time. Thus, a clear advantage of the ranking is to provide *a priori* information about the expected stress on the nodes, i.e. the expected future evolution of the load of the nodes, in a highly loaded situation and taking into account uniform mobility of mobile terminals in the coverage are of the group of nodes.

In a variant, the ranking is determined from transition matrix and based on the actual average handovers in the group of nodes BS1 to BS6.

The ranking of the nodes is the values in the eigenvector of the maximum eigenvalue of the transition matrix. The i-th component of the eigenvector expresses the ranking for the node BS*i* of the group of nodes. In the example of the Fig. 5, we have the following eigenvector V = [0.08 0.08 0.25 0.25 0.24 0.08] that is translated to the ranking shown in Fig. 5.

The node BS1 has a value equal to 0.08, the node BS2 has a value equal to 0.08, the node BS3 has a value equal to 0.25, the node BS4 has a value equal to 0.25, the node BS5 has a value equal to 0.24 and the node BS6 has a value equal to 0.08,

At next step S404, the processor 200 commands the transfer of the determined ranking to each node BS or determines at least one alternative node BS.

The processor 200 determines, using the determined ranking, alternative nodes for the mobile terminals.

The processor 200 may determine the alternative node list based on measurements received from the mobile terminals directly or collected by the nodes and transmitted to the gateway 200 and having the least ranking. The processor 200 uses the list for multiple handover preparation to the alternative nodes so the actual handover of the mobile terminal can be anticipated prior to the wired backhaul failure.

The processor 200 may determine the alternative node list based on mobile terminals measurements and may find for each mobile terminal good alternative nodes as nodes with good SINR, i.e. SINR received above a given signal quality threshold and having the least ranking.

The processor 200 may determine the *N* alternative nodes list as the *N* nodes with lowest rank, the N nodes may be chosen as the N nodes with lowest rank among a list of *N'>N* nodes with highest SINR for the mobile terminal, the *N* nodes may be chosen as the *N* nodes with highest SINR for the mobile among a list of *N'>N* nodes with lowest rank.

In a variant, the alternative node list is transferred to the related mobile terminal through the node serving the mobile terminal and the mobile terminal may trigger autonomously handover and/or coordinated multipoint transmission with chosen nodes of the alternative node list and based on its measurements.

In a variant, the alternative node list is determined by each node using the received ranking, in a similar way as the one performed by the processor 200.

At step S405, the processor 200 obtains from the nodes BS, the amount of handovers currently performed.

At next step S406, the processor 200 evaluates the need for updating the transition matrix. The transition matrix is updated for example if the amount of handovers currently performed for the mobile terminals to the alternative nodes increases the average load of the least ranked nodes above a given threshold or the processor 200 monitors the number of blocked and/or dropped calls in the group of nodes. If this number is above a predetermined threshold, the transition matrix needs to be recalculated and the processor 200 returns to step S401. Otherwise, the processor 200 interrupts the present algorithm.

**Fig. 7** discloses an example of an algorithm executed by a base station or a home base station according to the first and second modes of realization of the present invention.

More precisely, the present algorithm is executed by the processor 300 of each node BS and is preferably executed in case of Dynamic switching Coordinated multipoint transmission.

At step S700, the processor 700 obtains, from mobile terminals the node serves, measurements and builds a neighbour relation table. The neighbour relation table comprises the nodes for which by the mobile terminals have a SINR above a threshold or with received power above a predetermined threshold. The neighbour relation table is transferred to the gateway GW.

At next step S701, the processor 300 detects the reception, though the network interface, of a list of N alternative nodes or determines, using the receiving ranking of the nodes a list of N alternative nodes.

At next step S702, the processor 300 prepares handovers, for at least a part of the mobile terminals served by the node with the alternative nodes.

It has to be noted here that, instead of being prepared by the processor 300 of each node, handovers may be prepared by the processor 200 of the gateway GW.

**Fig. 8** discloses an example of an algorithm executed by the gateway according to a second mode of realization of the present invention.

The present algorithm will be disclosed in an example where it is executed by the processor 200 of the gateway GW and is preferably executed in case of Dual connectivity.

At step S800, the processor 200 detects the reception, through the network interface 206, of neighbour relation tables transferred by each of the nodes BS1 to BS6.

A neighbour relation table is built by each node from measurements from mobile terminals the node serves, i.e. the nodes seen by the mobile terminals with SINR above a threshold or with a received power above a predetermined threshold.

At next step S801, the processor 200 determines a neighbourhood graph of the group of nodes BS1 to BS6. The neighbourhood graph is constructed as follows: a node and another node are considered as neighbours if a significant portion of mobile terminals served by the node have performed handover to the other node in the past and/or the distance between a node and another node is below a predefined threshold and/or another node is reported by mobile terminals served by the node with a Reference Signal Received Power (RSRP) level upper than a predetermined threshold to the node by at least one mobile terminal and/or a node measures a RSRP level from another node upper than a predetermined threshold and/or the another node is reported by mobile terminals served by the node with a Reference Signal Received Quality (RSRQ) level to the node upper than a predetermined threshold.

Each node is considered as a vertex in the neighbourhood graph and two neighbouring nodes are connected by an edge.

The neighbourhood graph may be known prior to any handover of the mobile terminals in the group of nodes BS1 to BS6 since core network may configure the list of neighbours of the nodes by loading neighbour relation tables (NRT) into each node of the group of nodes in a deployment phase. The neighbourhood graph may be constructed from neighbour relation tables as follows: a node is neighbour of another node if the node is member of the NRT table of the other node.

At next step S802, the processor 200 determines a transition matrix from the neighbourhood graph. The transition matrix is a matrix that expresses uniform random mobility in the group of nodes BS1 to BS6. The transition matrix is as follows.

The off diagonal elements express the transition probability of the mobile terminals. For the row i, the off diagonal elements in column *j*≠0 are either equal to 0 if the node BS*j* is not in the neighbour relation table of the node BS*i* or equal to the inverse of the number of the neighbours of the node BS*i* if node BS*j* is in the neighbour relation table of the node BS*i*.

An example of a transition matrix is given in Fig. 5.

At next step S803, the processor 200 ranks the nodes BS1 to BS6.

For example, the ranking of the nodes is a number *r* , 0 < *r* < 1 , associated to each vertex of the neighbourhood graph as follows:
The ranking *r* of a node is high if the node is contributing to an important number of mobile terminals random displacement in the group of nodes i.e. the expected handovers of mobile terminals to the node is high when assuming no *a priori* information about the mobility path of the mobile terminal is given.

The ranking *r* of a node is low if the contribution of the node to random displacements of the mobile terminal in the group of nodes is low, i.e. the expected handovers of mobile terminals to the node is low when assuming no *a priori* information about the mobility path of the mobile terminal is given.

The ranking of the nodes may be determined using the transition matrix determined at step S802.

The eigenvector of the maximum eigenvalue of the transition matrix expresses the average proportion of independent paths that are linking the nodes of the graph when uniform random displacements of the mobile terminals are assumed through the coverage area of the group of nodes.

The ranking of the node is high if the node contributes to an important number of paths through the graph of the group of nodes. The node will encounter a lot of handovers with time. Thus, a clear advantage of the ranking is to provide *a priori* information about the expected stress on the nodes , i.e. the expected future evolution of the load of the nodes, in a highly loaded situation and taking into account the uniform mobility of mobile terminals in the coverage area of the group of nodes.

In a variant, the ranking is determined from transition matrix and based on the actual average handovers in the group of nodes BS1 to BS6.

The ranking of the nodes is the values in the eigenvector of the maximum eigenvalue of the transition matrix. The *i*-th component of the eigenvector is expressing the ranking for the node BS*i* of the group of nodes. In the example of the Fig. 5, we have the following eigenvector V = [0.08 0.08 0.25 0.25 0.24 0.08] that is translated to the ranking seen in Fig. 5.

The node BS1 has a value equal to 0.08, the node BS2 has a value equal to 0.08, the node BS3 has a value equal to 0.25, the node BS4 has a value equal to 0.25, the node BS5 has a value equal to 0.24 and the node BS6 has a value equal to 0.08,

At next step S804, the processor 200 commands the transfer of the determined ranking to each node BS or determines at least one alternative node BS.

The processor 200 determines, using the determined ranking, *N* alternative nodes for the mobile terminals.

The processor 200 determines the alternative node list based on measurements received from the mobile terminals directly or collected by the nodes and transmitted to the gateway 200 and having the least ranking. The processor 200 uses the list for multiple handover preparation to the alternative nodes so the actual handover of the mobile terminal may be anticipated prior to the wired backhaul failure.

The processor 200 may choose the *N* nodes as the *N* nodes with lowest rank among a list of *N'*≥*N* base station with highest SINR for the mobile terminal.

The *L* nodes carrying the control signalling are the *L* nodes with lowest rank (e.g., *L*=1) among the N nodes or the *L* nodes carrying the control signalling are the *L* nodes with highest SINR (e.g., *L*=1) among the *N* nodes or the *N* nodes may be chosen as the *N* nodes with highest SINR for the mobile terminal among a list of *N'>N* nodes with lowest rank.

The *N-L* nodes not carrying control signalling, but data, may be chosen as the *N-L* nodes with highest SINR for the mobile terminal among a list of *N'*≥*N-L* nodes with lowest rank and the *L* nodes carrying the control signalling may be chosen as the *L* nodes with highest SINR or the *N-L* nodes not carrying control signalling but data may be chosen as the *N-L* nodes with lowest rank among a list of *N'*≥*N-L* nodes with highest SINR for the mobile terminal and the *L* nodes carrying the control signalling may be chosen as the *L* nodes with lowest rank or the *L* nodes carrying control signalling may be chosen as the *L* nodes with highest SINR for the mobile terminal among a list of *N'*≥*L* nodes with lowest rank and the *N-L* nodes not carrying the control signalling may be chosen as the *N-L* nodes with highest SINR (e.g., *L*=1) or the *L* nodes carrying control signalling may be chosen as the *L* nodes with lowest rank among a list of *N'*≥*L* nodes with highest SINR for the mobile terminal and the *N-L* nodes not carrying the control signalling may be chosen as the *N-L* nodes with lowest rank.

In a variant, the alternative node list is transferred to the related mobile terminal through the node serving the mobile terminal and the mobile terminal may trigger autonomously handover of the control or data signalling with chosen nodes of the alternative node list and based on its measurements.

The processor 200 uses the list for enabling dual connectivity from N nodes. In case the backhaul of the transmitting nodes gets congested, another node from the *N* nodes can be dynamically chosen for transmission.

In a variant, the alternative node list is determined by each node using the received ranking, in a similar way as the one performed by the processor 200.

At step S805, the processor 200 obtains from the nodes BS, the amount of handovers currently performed.

At next step S806, the processor 200 evaluates the need for updating the transition matrix. The transition matrix is updated for example if the amount of handovers currently performed of the mobile terminals to the alternative nodes increases the average load of the least ranked nodes above a given threshold or the processor 200 monitors the number of blocked and/or dropped handovers for the control or data in the group of nodes. If this number is above a quality threshold, the transition matrix needs to be recalculated and the processor 200 returns to step S801. Otherwise, the processor 200 interrupts the present algorithm.

Naturally, many modifications can be made to the embodiments of the invention described above without departing from the scope of the present invention.

## Claims

1. Method for determining a ranking of nodes of a group of nodes (BS1 to BS6) in a centralizing device (GW) being in charge of, the ranking being intended to be used for determining a list of alternative nodes that may serve a mobile terminal (MT) located in the area covered by the group of nodes, the mobile terminal being served simultaneously by plural nodes, **characterized in that** the method comprises the steps, executed by the centralizing device, of:
- determining (S401) a neighbourhood graph of the group of nodes, the neighbourhood graph identifying neighbours nodes, a node is neighbour of another node if the node belongs to a neighbour relation table of the other node,
- determining (S402) a transition matrix from the determined neighbourhood graph, the transition matrix being a matrix that expresses uniform random mobility in the group of nodes, the off diagonal elements expressing the transition probability of mobile terminals, for the i-th row, the off diagonal elements in the j-th column with j≠0 being equal to 0 if the j-th node is not in the neighbour relation table of the i-th node or being equal to the inverse of the number of the neighbours of the i-th node if the j-th is in the neighbour relation table of the i-th node,
- ranking (S403) the nodes according to the determined transition matrix.

2. Method according to claim 1, **characterized in that** the diagonal matrix comprises the same number of line and columns as the number of nodes of the group of nodes, each line and column being dedicated to a respective node, the off diagonal elements of the transition matrix are equal to null value if the node, of which the line or column is dedicated to, is not neighbour of the node, the off diagonal elements of the transition matrix are equal to the inverse of the number of the neighbours of the node of which the line or column is dedicated to, if the node the is neighbour of the node of which the column or line is dedicated to.

3. Method according to any of the claims 1 to 2, **characterized in that** the ranking of the nodes is the values in the eigenvector of the maximum eigenvalue of the transition matrix.

4. Method according to any of the claims 1 to 3, **characterized in that** the method further comprises the step of transferring the ranking of the nodes to the nodes and **in that** the determination of the list of alternative nodes is performed by each node for at least one mobile terminal the node serves.

5. Method according to any of the claims 1 to 3, **characterized in that** the method further comprises the step of determining, by the centralizing device, the list of alternative nodes.

6. Method according to claim 5, **characterized in that** the alternative node list is based on measurements received from the mobile terminals directly or collected by the nodes and transmitted to the centralizing device and having the least ranking.

7. Method according to claim 1, **characterized in that** the mobile terminal is served simultaneously by plural nodes in a Dual connectivity transmission and the alternative node list based on measurements received from the mobile terminals directly or collected by the nodes and transmitted to centralizing device and having the least ranking.

8. Method according to claim 7, **characterized in that** the alternative node list comprises the *N* nodes as the *N* nodes with lowest rank among a list of *N'*≥*N* nodes with highest SINR for the mobile terminal, the nodes carrying the control signalling are the *L* nodes with lowest rank among the *N* nodes or the *L* nodes carrying the control signalling are the *L* nodes with highest SINR among the *N* nodes or the *N* nodes may be chosen as the *N* nodes with highest SINR for the mobile terminal among a list of *N'*≥*N* nodes with lowest rank, the *N-L* nodes not carrying control signalling being the *N-L* nodes with highest SINR for the mobile terminal among a list of *N'*≥*N-L* nodes with lowest rank or the *L* nodes carrying the control signalling being the *L* nodes with highest SINR or the *N-L* nodes not carrying control signalling but data may be chosen as the *N-L* nodes with lowest rank among a list of *N'*≥*N-L* nodes with highest SINR for the mobile terminal and the *L* nodes carrying the control signalling being the *L* nodes with lowest rank or the *L* nodes carrying control signalling being the *L* nodes with highest SINR for the mobile terminal among a list of *N'*≥*L* nodes with lowest rank and the *N-L* nodes not carrying the control signalling being the *N-L* nodes with highest SINR or the *L* nodes carrying control signalling being the *L* nodes with lowest rank among a list of *N'*≥*L* nodes with highest SINR for the mobile terminal and the *N-L* nodes not carrying the control signalling being the the *N-L* nodes with lowest rank.

9. Device for determining a ranking of nodes adapted to perform the method of claim 1.

10. Computer program product which can be directly loadable into a programmable device, comprising instructions or portions of code for implementing the steps of the method according to claims 1 to 8, when said computer program is executed on a programmable device.

## Patentansprüche

1. Verfahren zum Bestimmen einer Rangfolge einer Gruppe von Knoten (BS1 bis BS6) in einer zentral erfassenden Vorrichtung (GW), die mit der Leitung betraut ist, wobei beabsichtigt ist, dass die Rangfolge zum Bestimmen einer Liste von alternativen Knoten verwendet wird, die ein mobiles Endgerät (MT) bedienen können, das in dem durch die Gruppe von Knoten versorgten Bereich lokalisiert ist, wobei das mobile Endgerät gleichzeitig durch mehrere Knoten bedient wird, **dadurch gekennzeichnet, dass** das Verfahren die folgenden durch die die zentral erfassende Vorrichtung ausgeführten Schritte umfasst:
- Bestimmen (S401) eines Nachbarschaftsgraphen der Gruppe von Knoten, wobei der Nachbarschaftsgraph Nachbarknoten identifiziert, wobei ein Knoten eines anderen Knotens ist, wenn der Knoten zu einer Nachbar-Beziehungstabelle des anderen Knotens gehört,
- Bestimmen (S402) einer Übergangsmatrix aus dem bestimmten Nachbarschaftsgraphen, wobei die Übergangsmatrix eine Matrix ist, die eine einheitliche zufällige Mobilität in der Gruppe von Knoten ausdrückt, wobei die außerdiagonalen Elemente die Übergangswahrscheinlichkeit von mobilen Endgeräten ausdrücken, und zwar für die i-te Zeile, wobei die außerdiagonalen Elemente in der j-ten Spalte mit j ≠ 0 gleich 0 sind, wenn der j-te Knoten nicht in der Nachbar-Beziehungstabelle des i-ten Knotens ist, oder gleich dem Inversen der Anzahl der Nachbarn des i-ten Knotens ist, wenn der j-te Knoten in der Nachbar-Beziehungstabelle des i-ten Knotens ist,
- Einordnen (S403) der Knoten in eine Rangfolge gemäß der bestimmten Übergangsmatrix.

2. Verfahren nach Anspruch 1, **dadurch gekennzeichnet, dass** die Diagonalmatrix dieselbe Anzahl von Zeilen und Spalten wie die Anzahl von Knoten der Gruppe von Knoten umfasst, wobei jede Zeile und Spalte einem jeweiligen Knoten zugehörig ist, die außerdiagonalen Elemente der Übergangsmatrix gleich einem Nullwert sind, wenn der Knoten, von welchem die Zeile oder Spalte zugehörig ist, nicht Nachbar des Knotens ist, die außerdiagonalen Elemente der Übergangsmatrix gleich dem Inversen der Anzahl der Nachbarn des Knotens sind, von welchem die Zeile oder Spalte zugehörig ist, wenn der Knoten der Nachbar des Knotens ist, von welchem die Spalte oder Zeile zugehörig ist.

3. Verfahren nach einem der Ansprüche 1 bis 2, **dadurch gekennzeichnet, dass** die Rangfolge der Knoten in den Werten im Eigenvektor des maximalen Eigenwerts der Übergangsmatrix besteht.

4. Verfahren nach einem der Ansprüche 1 bis 3, **dadurch gekennzeichnet, dass** das Verfahren weiterhin den Schritt zum Transferieren der Rangfolge der Knoten zu den Knoten umfasst und dass die Bestimmung der Liste von alternativen Knoten durch jeden Knoten für wenigstens ein mobiles Endgerät, das der Knoten bedient, durchgeführt wird.

5. Verfahren nach einem der Ansprüche 1 bis 3, **dadurch gekennzeichnet, dass** das Verfahren weiterhin den Schritt zum Bestimmen, durch die zentral erfassende Vorrichtung, der Liste von alternativen Knoten umfasst.

6. Verfahren nach Anspruch 5, **dadurch gekennzeichnet, dass** die Liste von alternativen Knoten auf Messungen basiert, die von den mobilen Endgeräten direkt empfangen sind oder durch die Knoten gesammelt und zur zentral erfassenden Vorrichtung gesendet sind und die geringste Rangfolge haben.

7. Verfahren nach Anspruch 1, **dadurch gekennzeichnet, dass** das mobile Endgerät bei einer Übertragung mit Dual-Konnektivität durch mehrere Knoten gleichzeitig bedient wird und die Liste von alternativen Knoten auf Messungen basiert, die von den mobilen Endgeräten direkt empfangen sind oder durch die Knoten gesammelt und zur zentral erfassenden Vorrichtung gesendet sind und die geringste Rangfolge haben.

8. Verfahren nach Anspruch 7, **dadurch gekennzeichnet, dass** die Liste von alternativen Knoten die N Knoten als die N Knoten mit niedrigstem Rang unter einer Liste von N' ≥ N Knoten mit höchstem SINR für das mobile Endgerät umfasst, die Knoten, die die Steuerungssignalisierung tragen, die L Knoten mit niedrigstem Rang unter den N Knoten sind oder die L Knoten, die die Steuerungssignalisierung tragen, die L Knoten mit höchstem SINR unter den N Knoten sind oder die N Knoten als die N Knoten mit höchstem SINR für das mobile Endgerät unter der Liste von N' ≥ N Knoten mit niedrigstem Rang ausgewählt werden können, wobei die N - L Knoten, die keine Steuerungssignalisierung tragen, die N - L Knoten mit höchstem SINR für das mobile Endgerät unter einer Liste von N' ≥ N - L Knoten mit niedrigstem Rang sind, oder wobei die L Knoten, die keine Steuerungssignalisierung tragen, die L Knoten mit höchstem SINR sind, oder die N - L Knoten, die keine Steuerungssignalisierung tragen, aber Daten als die N - L Knoten mit niedrigstem Rang unter einer Liste von N' ≥ N - L Knoten mit höchstem SINR für das mobile Endgerät ausgewählt werden können, und die L Knoten, die die Steuerungssignalisierung tragen, die L Knoten mit niedrigstem Rang sind, oder die L Knoten, die Steuerungssignalisierung tragen, die L Knoten mit höchstem SINR für das mobile Endgerät unter einer Liste von N' ≥ L Knoten mit niedrigstem Rang sind, und wobei die N - L Knoten, die keine Steuerungssignalisierung tragen, die N - L Knoten mit höchstem SINR sind, oder die L Knoten, die Steuerungssignalisierung tragen, die L Knoten mit niedrigstem Rang unter einer Liste von N' ≥ L Knoten mit höchstem SINR für das mobile Endgerät sind, und wobei die N - L Knoten, die keine Steuerungssignalisierung tragen, die N - L Knoten mit niedrigstem Rang sind.

9. Vorrichtung zum Bestimmen einer Rangfolge von Knoten, dazu geeignet, das Verfahren nach Anspruch 1 durchzuführen.

10. Computerprogrammprodukt, das direkt ladbar in eine programmierbare Vorrichtung sein kann, umfassend Anweisungen oder Teilbereiche eines Codes zum Implementieren der Schritte des Verfahrens nach den Ansprüchen 1 bis 8, wenn das Computerprogramm auf einer programmierbaren Vorrichtung ausgeführt wird.

## Revendications

1. Procédé de détermination d'un classement de nœuds d'un groupe de nœuds (BS1 à BS6) dans un dispositif centralisateur (GW) en charge des nœuds, le classement étant destiné à être utilisé pour déterminer une liste de nœuds alternatifs pouvant servir un terminal mobile terminal (MT) situé dans la zone couverte par le groupe de nœuds, le terminal mobile étant servi simultanément par plusieurs nœuds, **caractérisé en ce que** le procédé comporte les étapes, exécutées par le dispositif de centralisation, de :
- détermination (S401) d'un graphe de voisinage du groupe de nœuds, le graphe de voisinage identifiant des nœuds voisins, un nœud étant voisin d'un autre nœud si le nœud appartient à une table de relations de voisinage de l'autre nœud,
- détermination (S402) d'une matrice de transition à partir du graphe de voisinage déterminé, la matrice de transition étant une matrice exprimant une mobilité aléatoire uniforme dans le groupe de nœuds, les éléments en diagonale exprimant la probabilité de transition des terminaux mobiles, pour la i-ème ligne, les éléments en diagonale de la j-ième colonne avec j ≠ 0 étant égaux à 0 si le j-ième nœud ne se trouve pas dans la table des relations de voisinage du i-ème nœud ou étant égaux à l'inverse du nombre des voisins du i-ème nœud si le j-ème nœud est dans la table de relations de voisinage du i-ème nœud,
- classement (S403) des nœuds en fonction de la matrice de transition déterminée.

2. Procédé selon la revendication 1, **caractérisé en ce que** la matrice diagonale comprend le même nombre de lignes et de colonnes que le nombre de nœuds du groupe de nœuds, chaque ligne et colonne étant dédiée à un nœud respectif, les éléments en diagonale de la matrice de transition sont égaux à la valeur nulle si le nœud auquel la ligne ou la colonne est dédiée n'est pas voisin du nœud,les éléments en diagonale de la matrice de transition sont égaux à l'inverse du nombre de voisins du nœud auquel la ligne ou la colonne est dédiée, si le nœud est voisin du nœud auquel la colonne ou la ligne est dédiée.

3. Procédé selon l'une quelconque des revendications 1 à 2, **caractérisé en ce que** le classement des nœuds correspond aux valeurs dans le vecteur propre de la valeur propre maximale de la matrice de transition.

4. Procédé selon l'une quelconque des revendications 1 à 3, **caractérisé en ce que** le procédé comporte en outre l'étape de transfert du classement des nœuds aux nœuds et **en ce que** la détermination de la liste des nœuds alternatifs est effectuée par chaque nœud pour au moins un terminal mobile servi par le nœud.

5. Procédé selon l'une quelconque des revendications 1 à 3, **caractérisé en ce que** le procédé comporte en outre l'étape de détermination par le dispositif centralisateur de la liste des nœuds alternatifs.

6. Procédé selon la revendication 5, **caractérisé en ce que** la liste de nœuds alternatifs est basée sur des mesures reçues directement des terminaux mobiles ou collectées par les nœuds et transmises au dispositif centralisateur et ayant le plus faible classement.

7. Procédé selon la revendication 1, **caractérisé en ce que** le terminal mobile est servi simultanément par plusieurs nœuds dans une transmission à double connectivité et la liste de nœuds alternatifs est basée sur des mesures reçues directement des terminaux mobiles ou collectées par les nœuds et transmises au dispositif de centralisation et ayant le plus faible classement.

8. Procédé selon la revendication 7, **caractérisé en ce que** la liste de nœuds alternatifs comprend les N nœuds comme les N nœuds ayant le plus faible classement parmi une liste de N'≥N nœuds ayant le SINR le plus élevé pour le terminal mobile, les nœuds portant la signalisation de contrôle sont les L nœuds ayant le plus faible classement parmi les N nœuds ou les L nœuds portant la signalisation de contrôle sont les L nœuds ayant le SINR le plus élevé parmi les N nœuds ou les N nœuds peuvent être choisis comme les N nœuds ayant le plus haut SINR pour le terminal mobile parmi une liste parmi de N'≥N nœuds ayant le plus faible classement, les N-L nœuds ne portant pas la signalisation de contrôle étant les nœuds N-L ayant le SINR le plus élevé pour le terminal mobile parmi une liste N'≥N-L de nœuds ayant le plus faible classement ou les L nœuds portant la signalisation de contrôle L nœuds avec le plus haut numéro SINR ou les nœuds NL ne transportant pas la signalisation de contrôle, mais les données peuvent être choisies comme nœuds NL avec le rang le plus bas parmi une liste de nœuds N'≥NL avec le plus haut SINR pour le terminal mobile et les L nœuds acheminant le signal de contrôle étant les L nœuds avec le rang le plus bas ou les L nœuds portant la signalisation de contrôle étant les L nœuds avec le SINR le plus élevé pour le terminal mobile parmi une liste de nœuds N'≥L avec le classement le plus faible et les N-L nœuds ne portant pas la signalisation de contrôle étant les N-L nœuds ayant le rapport SINR le plus élevé ou les L nœuds portant la signalisation de contrôle étant les L nœuds ayant le classement le plus faible parmi une liste de N'≥L nœuds ayant le SINR le plus élevé pour le terminal mobile et les N-L nœuds ne portant pas la signalisation de contrôle étant les N-L nœuds ayant le classement le plus faible.

9. Dispositif pour déterminer un classement de nœuds adapté pour exécuter le procédé de la revendication 1.

10. Produit programme d'ordinateur pouvant être chargé directement dans un dispositif programmable, comprenant des instructions ou des portions de code pour la mise en œuvre des étapes du procédé selon les revendications 1 à 8, lorsque ledit programme informatique est exécuté sur un dispositif programmable.
